# EUROPÄISCHE PATENTANMELDUNG

(11) **EP 4 338 578 A1**
(43) Veröffentlichungstag der Anmeldung: **20.03.2024**
(21) Anmeldenummer: 23186577.5
(22) Anmeldetag: 20.07.2023
(51) Int. Cl.: A01F 12/20, A01F 12/40, A01D 41/12, A01F 7/04

(54) **DRESCHTROMMEL FÜR EINE DRESCHEINRICHTUNG EINES MÄHDRESCHERS SOWIE MÄHDRESCHER**

(30) Priorität: 13.09.2022 DE 102022123307
(71) Anmelder: CLAAS Selbstfahrende Erntemaschinen GmbH, 33428 Harsewinkel (DE)
(72) Erfinder: Bußmann, Jens, 49179 Ostercappeln (DE); Holtmann, Bernd, 48324 Sendenhorst (DE)
(74) Vertreter: CLAAS Gruppe

(57) **Zusammenfassung**

Dreschtrommel (5) umfassend einen Trommelkörper (12) sowie eine Vielzahl von Schlagleisten (13), wobei die Schlagleisten (13) jeweils eine Schlagkante (15) aufweisen, die einen Umfangskreis (16) um eine Mittelachse (11) des Trommelkörpers (12) beschreiben, auf dem die jeweilige Schlagkante (15) bei bestimmungsgemäßem Betrieb der Dreschtrommel (5) in einem Schlagradius (31) um die Mittelachse (11) umläuft.

Um eine Dreschtrommel bereitzustellen, die dazu eingerichtet sind, dass ein Erntegutstrom im Zuge seiner Übergabe von einer Drescheinrichtung an eine nachgeschaltete Trenneinrichtung verbessert wird, wird erfindungsgemäß ein in Längsrichtung des Trommelkörpers (12) betrachtet mittig an dem Trommelkörpers (12) angeordneter Schneidring (17) vorgeschlagen, der in Umfangsrichtung des Trommelkörpers (12) umläuft, wobei der Schneidring (17) mindestens umlaufende Schneidkante (18) aufweist, die einen Umfangskreis (30) beschreibt, dessen bezogen auf die Mittelachse (11) gemessener Schneidradius (21) größer ist als die Schlagradien der Schlagkanten.

Mähdrescher mit einer erfindungsgemäßen Dreschtrommel.

## Beschreibung

Die vorliegende Anmeldung betrifft eine Dreschtrommel für eine Drescheinrichtung eines Mähdreschers gemäß dem Oberbegriff von Anspruch 1. Ferner betrifft die vorliegende Anmeldung einen selbstfahrenden Mähdrescher gemäß dem Oberbegriff von Anspruch 7.

Der Mähdrescher ist dazu vorgesehen und eingerichtet, auf einem Feld aufstehende Pflanzen zu ernten, wobei die Pflanzen unter anderem mittels einer Drescheinrichtung verarbeitet werden. Diese ist als tangentiale Drescheinrichtung ausgebildet und umfasst eine tangentiale Vortrommel sowie eine in Strömungsrichtung eines Erntegutstroms der Vortrommel nachgeschaltete tangentiale Dreschtrommel. Ferner umfasst die Drescheinrichtung einen Dreschkorb, der sowohl die Vortrommel als auch die Dreschtrommel zumindest bereichsweise ummantelnd einfasst. Im Zuge der Verarbeitung des jeweiligen Ernteguts wird letzteres in einem Dreschspalt zwischen der Vortrommel und dem Dreschkorb bzw. zwischen der Dreschtrommel und dem Dreschkorb geführt und derart verarbeitet, dass sich Früchte des Ernteguts von verbleibenden Pflanzenresten des Ernteguts lösen. Ein Großteil der Früchte wird unmittelbar mittels des Dreschkorbs von den Pflanzenresten abgeschieden. Der Dreschkorb kann relativ zu der Dreschtrommel bewegbar sein, sodass ein zwischen der Dreschtrommel und dem Dreschkorb befindlicher Dreschspalt veränderbar ist. Die Veränderung einer Mächtigkeit des Dreschspalts wird typischerweise je nach herrschenden Randbedingungen wie beispielsweise Feuchte des Ernteguts und Erntegutdurchsatz vorgenommen, um das Dreschergebnis zu optimieren.

Die Dreschtrommel der Drescheinrichtung umfasst einen zylindrischen, um seine Mittelachse drehantreibbaren Trommelkörper sowie eine Vielzahl von Schlagleisten, die an einer äußeren Mantelfläche des Trommelkörpers angeordnet sind. Die Schlagleisten weisen jeweils eine Schlagkante auf, die parallel zu der Mittelachse des Trommelkörpers orientiert ist. Mithin erstrecken sich die Schlagleisten parallel zu der Mittelachse entlang des Trommelkörpers, wobei vorzugsweise sich die Schlagleisten über eine gesamte Länge des Trommelkörpers erstrecken. Die Schlagleisten sind dazu vorgesehen, mit dem Erntegut in Kontakt zu treten und eine Schlagenergie auf das Erntegut auszuüben, sodass die Früchte "ausgedroschen" werden, wodurch die Trennung der Früchte von den Pflanzenresten erfolgt. Damit die Schlagleisten bzw. insbesondere deren Schlagkanten in den beschriebenen Eingriff mit dem Erntegut treten können, stehen die Schlagleisten jeweils in radiale Richtung bezogen auf die Mittelachse des Trommelkörpers in eine von der Mittelachse weg gerichtete Richtung über die äußere Mantelfläche des Trommelkörpers vor. Die radial außenliegenden Schlagkanten der Schlagleisten beschreiben um die Mittelachse einen Umfangskreis, auf dem sie sich im Zuge eines Drehantriebs der Dreschtrommel bewegen. Der Umfangskreis der Schlagkanten weist bezogen auf die Mittelachse einen Schlagradius auf. Vorzugsweise sind die Schlagleisten derart ausgebildet, dass die Umfangskreise aller Schlagkanten sämtlicher Schlagleisten zumindest im Wesentlichen den gleichen Schlagradius aufweisen.

Soweit die Früchte noch nicht im Bereich der Drescheinrichtung durch den Dreschkorb abgeschieden werden, wird ein verbleibendes Gemisch aus Pflanzenresten und abgelösten Früchten von der Drescheinrichtung an eine unmittelbar nachgeschaltete, axiale Trenneinrichtung übergeben, mittels der die verbliebenen Früchte von den Pflanzenresten trennbar sind. Die Trenneinrichtung umfasst hierzu zwei axiale Trennrotoren, die jeweils um eine Drehachse drehantreibbar gelagert sind. Typischerweise erstrecken sich die Trennrotoren parallel zueinander und sind in Längsrichtung des Mähdreschers betrachtet nebeneinander angeordnet. Um die Übergabe des Ernteguts von der Drescheinrichtung an die Trenneinrichtung zu erleichtern, kann die Trenneinrichtung an ihrem der Drescheinrichtung zugewandten Ende einen Einlaufkopf umfassen, in den das Erntegut ausgehend von der Drescheinrichtung übergebbar ist. Der Einlaufkopf hat die Funktion, den Erntegutstrom geordnet den Trennrotoren zuzuleiten.

Die Trennrotoren weisen an ihren der Drescheinrichtung zugewandten Enden in der Regel jeweils mindestens einen Einlaufflügel auf, der sich bezogen auf die Drehachse des jeweiligen Trennrotors radial erstreckt und dazu vorgesehen und eingerichtet ist, in einen jeweiligen Einlaufbereich des Einlaufkopfs, der dem jeweiligen Trennrotor zugeordnet ist, übergebenes Erntegut zu erfassen und in eine Rotationsbewegung um die Drehachse des Trennrotors zu versetzen. Im Zuge des Betriebs der Trennrotoren wird das Erntegut mittels eines jeweiligen Trennrotors spiralförmig entlang dessen Drehachse bis zu einem hinteren Ende der Trenneinrichtung transportiert. Durch die mechanische Einwirkung des Trennrotors auf das Gemisch findet hierbei die gewünschte Trennung der Früchte von den Pflanzenresten statt. Die Früchte werden durch ein Dreschkorb der Trenneinrichtung nach unten auf eine Siebeinrichtung abgeschieden.

Nach der Trennung des Gemischs in Pflanzenreste und Früchte werden die Pflanzenreste schließlich an einem hinteren Ende des Mähdreschers ausgeworfen, während die Früchte in einem Korntank gesammelt werden.

Ein Mähdrescher mit einer Dreschtrommel der eingangs beschriebenen Art ist im Stand der Technik bereits bekannt. Hierzu wird auf die Offenlegungsschrift DE 42 32 450 A1 hingewiesen, die einen selbstfahrenden Mähdrescher mit einer axialen Trenneinrichtung beschreibt. Das Dokument beschäftigt sich damit, eine Drehmomentbelastung des mindestens einen Trennrotors der Trenneinrichtung zu vergleichmäßigen.

Insbesondere in Konstellationen, in denen das Erntegut im Nachgang der Drescheinrichtung an eine axiale Trenneinrichtung übergeben wird, ist es von Bedeutung, den Erntegutstrom in mehrere Teilströme, typischerweise einen Teilstrom pro Trennrotor, aufzuteilen. Dies liegt darin begründet, dass axiale Trenneinrichtungen typischerweise mehrere, beispielsweise zwei, parallel zueinander sowie nebeneinander angeordnete Trennrotoren aufweisen, auf die das von der Drescheinrichtung übernommene Erntegut aufgeteilt werden muss. Um die Aufteilung des Erntegutstroms auf die Trennrotoren zu bewerkstelligen, verfügt die Trenneinrichtung typischerweise über einen vorstehend beschriebenen Einlaufkopf, der an einem der Drescheinrichtung zugewandten Ende der Trenneinrichtung ausgebildet ist. Der Einlaufkopf definiert eine einer Anzahl der Trennrotoren entsprechende Anzahl von Einlaufbereichen, wobei jedem der Einlaufbereiche einer der Trennrotoren zugeordnet ist. Bei der Übergabe des Erntegutstroms von der Drescheinrichtung an die Trenneinrichtung wird das Erntegut gezwungenermaßen auf die Einlaufbereiche aufgeteilt und auf diese Weise den Trennrotoren zugeführt.

Insbesondere in einer bevorzugten Konstellation, in der das Erntegut unmittelbar von der Dreschtrommel an die Trenneinrichtung übergeben wird, hat sich der Erntegutfluss im Zuge der Übergabe von der Drescheinrichtung an die Trenneinrichtung als verbesserungsfähig herausgestellt. Dies betrifft vor allem die Aufteilung des Erntegutstroms auf die separaten Einlaufbereiche des Einlaufkopfs. Im Zuge dieser Aufteilung kann es in einem Mittelbereich zwischen den Einlaufbereichen zu einer unerwünschten Komprimierung des Ernteguts oder zu Verstopfungen kommen.

Der vorliegenden Anmeldung liegt mithin die Aufgabe zugrunde, eine Dreschtrommel sowie einen Mähdrescher bereitzustellen, die dazu beitragen bzw. dazu eingerichtet sind, dass die Strömung des Ernteguts im Zuge dessen Übergabe von der Drescheinrichtung an die Trenneinrichtung verbessert wird.

Die zugrunde liegende Aufgabe wird erfindungsgemäß mittels einer Dreschtrommel mit den Merkmalen des Anspruchs 1 gelöst. Vorteilhafte Ausgestaltungen ergeben sich aus den zugehörigen Unteransprüchen.

Die erfindungsgemäße Dreschtrommel ist durch einen Schneidring gekennzeichnet, der in Längsrichtung des Trommelkörpers betrachtet mittig an der äußeren Mantelfläche des Trommelkörpers angeordnet ist und in Umfangsrichtung des Trommelkörpers umläuft. Mit anderen Worten erstreckt sich der Schneidring ringförmig um den Trommelkörper innerhalb einer senkrecht zu der Mittelachse des Trommelkörpers orientierten Ebene. Der Schneidring weist mindestens eine radial äußere, in Umfangsrichtung des Trommelkörpers umlaufende Schneidkante auf. Diese ist derart ausgebildet, dass sie dazu geeignet ist, Pflanzenmaterial, das insbesondere von Pflanzenresten gebildet sein kann, zu zerschneiden. Die Schneidkante verläuft in einer senkrecht zu der Mittelachse des Trommelkörpers angeordneten Schneidebene und beschreibt einen Umfangskreis, dessen bezogen auf die Mittelachse des Trommelkörpers gemessener Schneidradius größer ist als die Schlagradien der Schlagkanten der Schlagleisten. Anders ausgedrückt steht die Schneidkante des Schneidrings radial bezogen auf den Trommelkörper gegenüber den Schlagkanten der Schlagleisten vor. Der Schneidradius kann identisch zu den Schlagradien oder gegenüber den Schlagradien lediglich minimal größer ausfallen, wobei in letztgenannten Fall vorzugsweise der Schneidradius den Schlagradius einer jeweiligen Schlagkante im Bereich zwischen 1 mm und 3 mm, vorzugsweise zwischen 1,5 mm und 2 mm, übersteigt.

Die erfindungsgemäße Dreschtrommel hat viele Vorteile. Insbesondere ist sie dazu geeignet, den Erntegutstrom mittig bezogen auf ihre Mittelachse in einen linken Teil und einen rechten Teil zu trennen, indem Pflanzenmaterial, das sich in einem Mittelbereich der Dreschtrommel befindet und im Zuge der Übergabe an den Einlaufkopf zu einem der beiden Einlaufbereiche geleitet werden muss, durchtrennt bzw. durchgeschnitten wird, wodurch die Teile des Pflanzenmaterials, die dem in Längsrichtung der Mittelachse betrachtet linken Teil des Trommelkörpers zugeordnet sind, ohne Weiteres dem linken Einlaufbereich des Einlaufkopfs und umgekehrt die Teil des Pflanzenmaterials, die dem rechten Teil des Trommelkörpers zugeordnet sind, ohne Weiteres dem rechten Einlaufbereich des Einlaufkopfs zugeleitet werden können. Hierdurch ist insbesondere vermieden, dass Pflanzenmaterial an einem mittigen Gutstromteiler des Einlaufkopfs, der in Form einer vertikalen Trennwand ausgebildet sein kann und die beiden Einlaufbereiche voneinander trennt, hängenbleibt und den Fluss des Erntegutstroms hierdurch hindert und stört. Die Ausgestaltung in der Art, dass der Schneidradius größer ist als die Schlagradien, führt dazu, dass der schneidende Eingriff des Schneidrings mit dem Erntegut tatsächlich eintritt und das Erntegut nicht durch die Wirkung der Schlagleisten von einem Eingriff mit dem Schneidring abgehalten wird.

In einer vorteilhaften Ausgestaltung der erfindungsgemäßen Dreschtrommel ist der Schneidring von einer Vielzahl einzelner Ringsegmente gebildet, wobei jeweils ein Ringsegment in einen Zwischenraum zwischen zwei benachbarten Schlagleisten eingesetzt ist. Die Ringsegmente sind gemeinsam derart in einer senkrecht zu der Mittelachse des Trommelkörpers orientierten Ebene angeordnet, dass sie gemeinsam den Schneidring bilden sowie gemeinsam die ringförmig umlaufende, in diesem Fall unterbrochene, Schneidkante ausbilden. Aufgrund der Anordnung der einzelnen Ringsegmente zwischen benachbarten Schlagleisten ist die mindestens eine Schneidkante in Zwischenbereichen zwischen zwei benachbarten Ringsegmenten unterbrochen. Der Schneidring ist bei dieser Ausgestaltung folglich ebenso wie die Schneidkante nicht in sich geschlossen, sondern in Umfangsrichtung des Trommelkörpers betrachtet in äquidistanten Abständen unterbrochen. Der Vorteil dieser Ausgestaltung besteht darin, dass für eine Wartung einzelne Abschnitte des Schneidrings nicht der Schneidring als Ganzes bearbeitet oder demontiert werden muss, sondern lediglich einzelne Segmente demontiert und im Schadensfall ausgewechselt werden können. Ebenso ist eine solche Ausgestaltung als Nachrüstlösung für bestehende Dreschtrommel denkbar, wobei die einzelnen Ringsegmente nachträglich auf den Trommelkörper einer solchen Dreschtrommel montiert werden und schließlich gemeinsam den Schneidring mit der mindestens einen umlaufenden Schneidkante bilden.

In einer weiterhin vorteilhaften Ausgestaltung der erfindungsgemäßen Dreschtrommel umfasst der Schneidring eine Mehrzahl von Schneidscheiben, vorzugsweise genau zwei Schneidscheiben, die in Längsrichtung des Trommelkörpers betrachtet nebeneinander angeordnet sind. Vorzugsweise sind die Schneidscheiben derart relativ zueinander angeordnet, dass sie sich unmittelbar nebeneinander befinden. Die Schneidscheiben bilden bevorzugt jeweils eine eigene Schneidkante aus, sodass bei der beschriebenen Ausgestaltung mit mehreren Schneidscheiben effektiv mehrere Schneidkanten vorhanden sind, mittels derer das Erntegut durchschnitten werden kann. In Versuchen hat sich gezeigt, dass hierdurch der Anteil von Pflanzenmaterial, das mit dem Schneidring in Kontakt tritt, jedoch gleichwohl nicht erfolgreich durchgeschnitten wird, sinkt. Durch die Verwendung mehrerer Schneidscheiben, die jeweils eine eigene Schneidkante ausbilden, ist folglich die Zuverlässigkeit hinsichtlich der schneidenden Wirkung des Schneidrings verbessert. Vorteilhafterweise sind die Schneidradien der Umfangskreis, Schneidkanten bezogen auf die Mittelachse des Trommelkörpers beschreiben, gleich groß.

Weiterhin kann eine solche Ausgestaltung vorteilhaft sein, bei der mindestens eine Schneidscheibe mehrschichtig nach Art eines Sandwichs aufgebaut ist, wobei eine mittlere Schicht von einem härteren Material gebildet ist als beidseits der mittleren Schicht an diese angeschlossene Randschichten. Insbesondere kann die mittlere Schicht von einem Stahlblech mit einer höheren Güte und mithin einer höheren Härte gebildet sein als die Randschichten, die bevorzugt von Stahlblechen mit einer gegenüber der mittleren Schicht geringeren Güte und mithin geringerer Härte gebildet sind. Vorzugsweise sind die Randschichten gleichartig ausgebildet. Die beschriebene Bauweise trägt dazu bei, dass die Randschichten schneller verschleißen als die Mittelschicht, wodurch die Schneidscheibe länger scharf bleibt.

Weiterhin kann eine solche Ausgestaltung von Vorteil sein, bei der die mindestens eine Schneidkante des Schneidrings, vorzugsweise sämtliche Schneidkanten des Schneidrings, eine Sägezahnkontur oder eine Wellenkontur aufweisen. Bei dieser Ausgestaltung ist die Schneidwirkung der jeweiligen Schneidkante zusätzlich verbessert, wodurch ein zuverlässiges Zerschneiden von Pflanzenmaterial im Mittelbereich der Dreschtrommel verbessert ist. Die sich hierdurch ergebenden Vorteile betreffend den Fluss des Erntegutstroms im Zuge der Übergabe an den Einlaufkopf mit seinen separaten Einlaufbereichen sind vorstehend bereits erläutert.

Die zugrunde liegende Aufgabe wird ferner erfindungsgemäß mittels eines selbstfahrenden Mähdreschers mit den Merkmalen des Anspruchs 7 gelöst. Vorteilhafte Ausgestaltungen ergeben sich aus den zugehörigen Unteransprüchen.

Der Mähdrescher umfasst die eingangs beschriebene tangentiale Drescheinrichtung sowie eine tangentiale Trenneinrichtung, wobei die Trenneinrichtung zwei axiale Trennrotoren umfasst, die in Längsrichtung des Mähdreschers betrachtet nebeneinander angeordnet sind und sich typischerweise parallel zueinander erstrecken. Die Trenneinrichtung ist der Drescheinrichtung unmittelbar nachgeschaltet, sodass mittels der Drescheinrichtung verarbeitetes Erntegut ausgehend von der Drescheinrichtung unmittelbar an die Trenneinrichtung übergeben wird. Bevorzugt erfolgt die Übergabe des Ernteguts unmittelbar von der Dreschtrommel an die Trenneinrichtung, wobei bei dieser Ausführung auf eine zusätzliche Wendetrommel bzw. Zuführtrommel verzichtet wird.

Der erfindungsgemäße Mähdrescher ist dadurch gekennzeichnet, dass die Dreschtrommel der Drescheinrichtung gemäß der vorliegenden Erfindung ausgebildet ist. Die sich hierdurch ergebenden Vorteile sind vorstehend bereits dargelegt. Insbesondere ist die Dreschtrommel aufgrund ihres Schneidrings dazu geeignet, Pflanzenmaterial zu zerschneiden und auf diese Weise die Übergabe des Ernteguts bzw. den Fluss des Erntegutstroms im Zuge dieser Übergabe an die Trenneinrichtung zu verbessern. Das Zerschneiden von Pflanzenmaterial in dem Mittelbereich der Dreschtrommel bewirkt eine klare Zuordnung von Erntegut zu einer linken Seite und einer rechten Seite der Dreschtrommel, die mit den nebeneinander angeordneten axialen Trennrotoren korrespondiert, sodass das Erntegut, das der linken Seite der Dreschtrommel zugeordnet ist, an den einen Trennrotor und das Erntegut, das der rechten Seite der Dreschtrommel zugeordnet ist, an den anderen Trennrotor übergebbar ist.

In einer vorteilhaften Ausgestaltung des erfindungsgemäßen Mähdreschers weist die Trenneinrichtung an einem der Drescheinrichtung zugewandten Ende einen Einlaufkopf auf, in den der Erntegutstrom von der Drescheinrichtung aus kommend übergebbar und geordnet den Trennrotoren zuleitbar ist. Der Einlaufkopf weist hierfür eine der Anzahl der Trennrotoren entsprechende Anzahl von Einlaufbereichen auf, von denen jeweils einer einen der Trennrotoren zugeordnet ist. Die beiden Einlaufbereiche sind vorteilhafterweise an einem der Drescheinrichtung zugewandten Ende des Einlaufkopfs mittels eines Gutstromteilers räumlich voneinander getrennt. Der Gutstromteiler ist bevorzugt von einer vertikalen Trennwand gebildet, mittels der der Erntegutstrom geteilt auf die Einlaufbereiche aufteilbar ist. Die geordnete Zuleitung des Erntegutstroms inklusive der Aufteilung desselben auf die beiden Trennrotoren mittels des beschriebenen Einlaufkopfs hat sich als vorteilhaft herausgestellt, um den Erntegutstrom störungsfrei zu verarbeiten. Insbesondere ist ein "Umschlingen" des Gutstromteilers, bei dem sich Pflanzenreste an dem Gutstromteiler verfangen und den Fluss des Ernteguts stören, zumindest im Wesentlichen vermieden.

Sofern ein beschriebener Einlaufkopf vorhanden ist, hat es sich weiterhin als besonders vorteilhaften erwiesen, wenn die Dreschtrommel derart relativ zu dem Einlaufkopf positioniert ist, dass die mindestens eine Schneidkante des Schneidrings räumlich dem Gutstromteiler zwischen den beiden Einlaufbereichen zugeordnet ist. Dies hat den Effekt, dass das Pflanzenmaterial durch Wirkung des Schneidrings genau dort durchschnitten wird, wo in der Folge stromabwärts der Drescheinrichtung die Aufteilung des Erntegutstroms mittels des Gutstromteilers auf den linken und den rechten Einlaufbereich des Einlaufkopfs stattfindet. Ein Verhaken von Pflanzenmaterial an dem Gutstromteiler, das zu einer spürbaren Störung der Strömung des Ernteguts beitragen kann, ist hierdurch weitestgehend vermieden.

Weiterhin ist es besonders von Vorteil, wenn die mindestens eine Schneidkante des Schneidrings in einem Abstand von maximal 20 mm, vorzugsweise maximal 10 mm, weiter vorzugsweise maximal 5 mm, vor dem Einlaufkopf angeordnet ist. Mit anderen Worten ist die Dreschtrommel derart relativ zu dem Einlaufkopf positioniert, dass der Umfangskreis der mindestens einen Schneidkante in dem beschriebenen Abstand zu dem Einlaufkopf positioniert ist, wobei der Abstand so gering wie möglich sein sollte, sodass unter Einhaltung einer Fertigungstoleranz eine Kollision der Schneidkante mit dem Einlaufkopf noch ausgeschlossen ist. Angesichts der vorstehenden Erläuterung ist es weiterhin besonders vorteilhaft, wenn der Umfangskreis der mindestens einen Schneidkante an einer Nahstelle, an der ein Abstand zwischen dem Umfangskreis und dem Einlaufkopf minimal ist, dem Gutstromteiler des Einlaufkopfs zugeordnet ist. Die Anordnung des Schneidrings bzw. von dessen Schneidkante in unmittelbarer räumlicher Nähe zu dem Einlaufkopf hat den Vorteil, dass etwaiges Pflanzenmaterial, das nicht von der Schneidwirkung des Schneidrings erfasst wurde, nicht stromabwärts der Dreschtrommel in dem Bereich des Gutstromteilers zwischen die Einlaufbereiche gelangen kann und dort trotz Vorhandenseins des Schneidrings zu der beschriebenen Störung infolge eines unbeabsichtigten Verhakens mit dem Gutstromteiler führt.

In einer weiterhin vorteilhaften Ausgestaltung umfasst der Dreschkorb eine Gutleithilfe, die dem Gutstromteiler zugeordnet ist und diesen bereichsweise umgreift. Bei dieser Ausgestaltung ist die Gutleithilfe als Teil des Dreschkorbs gemeinsam mit dem Übrigen Dreschkorb relativ zu der Dreschtrommel bewegbar, wobei infolge einer Bewegung des Dreschkorbs ein Abstand desselben zu der Dreschtrommel veränderbar ist. Hierdurch wird die Mächtigkeit eines sich zwischen dem Dreschkorb und der Dreschtrommel erstreckenden Dreschspalts verändert, wodurch in Abhängigkeit von äußeren Randbedingungen die Ernteleistung verbessert werden kann. Die Gutleithilfe trägt dazu bei, dass das von der Drescheinrichtung an die Trenneinrichtung übergebene Erntegut unabhängig von einer Position des Dreschkorbs relativ zu der Dreschtrommel zuverlässig auf den linken und den rechten Einlaufbereich des Einlaufkopfs verteilt wird. Dies ist dadurch begründet, dass die Gutleithilfe als Teil des Dreschkorbs im Zuge einer Bewegung zumindest eines letzten, der Trenneinrichtung zugeordneten Korbsegments des Dreschkorbs an dem Gutstromteiler entlang geführt wird und mithin seine Position relativ zu dem übrigen Dreschkorb nicht verändert. Folglich ist die leitende Wirkung der Gutleithilfe auf den Erntegutstrom unabhängig von der Einstellung des Dreschspalts zwischen der Dreschtrommel und dem Dreschkorb.

Um die Gutleithilfe möglichst nah an dem Gutstromteiler entlang zu führen, kann es weiterhin besonders vorteilhaft sein, wenn die Gutleithilfe an einer von dem übrigen Dreschkorb abgewandten Seite eine Nut umfasst, in der der Gutstromteiler geführt ist. Die Umgreifung des Gutstromteilers mittels der Gutleithilfe erfolgt bei dieser Ausgestaltung mittels dieser Nut, wobei der Gutstromteiler zwischen Seitenwände der Nut und mithin innerhalb der Nut geführt ist.

Weiterhin kann eine solche Ausgestaltung des erfindungsgemäßen Mähdreschers besonders von Vorteil sein, bei der zumindest ein Korbsegment des Dreschkorbs bündig einem der Drescheinrichtung zugewandten Ende des Einlaufkopfs vorgeordnet ist. Durch diese Ausgestaltung ist ein Übergang des Erntegutstroms von dem Dreschkorb zu dem Einlaufkopf hindernisfrei möglich, wodurch die Strömung des Ernteguts begünstigt wird.

Die Erfindung ist nachstehend anhand eines Ausführungsbeispiels, das in den Figuren dargestellt ist, näher erläutert. Es zeigt:
- Fig. 1:: Einen Querschnitt durch einen Mähdrescher gemäß dem Stand der Technik,
- Fig. 2:: Ein Querschnitt durch einen Arbeitsstrang eines Mähdreschers gemäß dem Stand der Technik,
- Fig. 3:: Ein Detail einer Drescheinrichtung des Arbeitsstrangs gemäß Figur 2,
- Fig. 4:: Eine perspektivische Ansicht einer erfindungsgemäßen Dreschtrommel in Zusammenwirkung mit einem Einlaufkopf einer Trenneinrichtung,
- Fig. 5:: Ein Querschnitt durch die Dreschtrommel gemäß Figur 4,
- Fig. 6:: Ein Detail eines Übergangsbereich zwischen der Dreschtrommel und dem Einlaufkopf gemäß Figur 4,
- Fig. 7:: Ein weiteres Detail des Übergangsbereichs gemäß Figur 6,
- Fig. 8:: Ein Detail eines Gutleitelements eines Dreschkorbs.

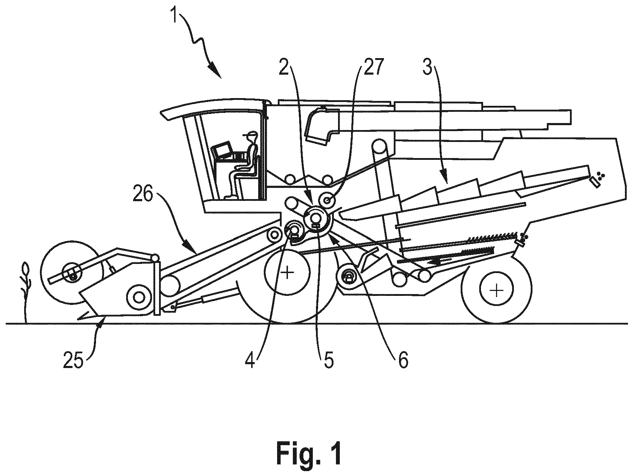

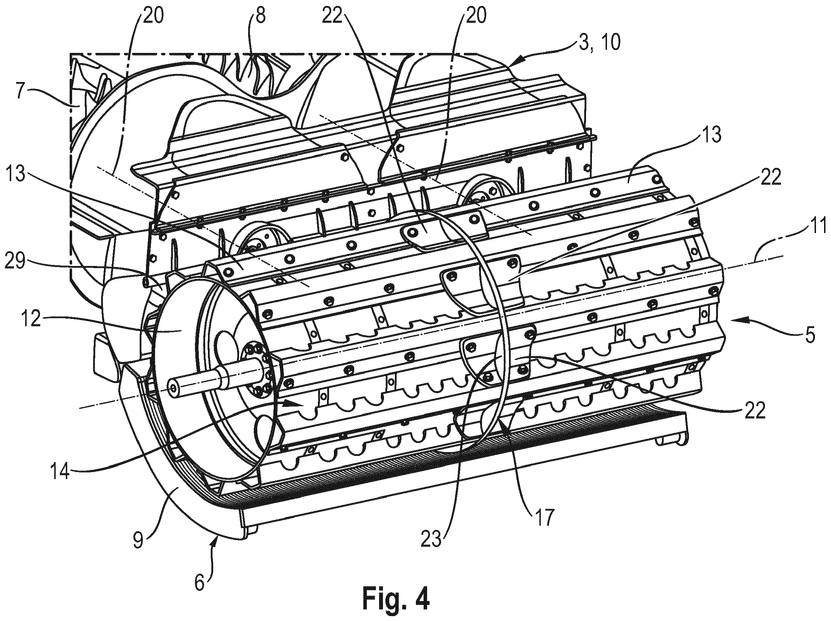

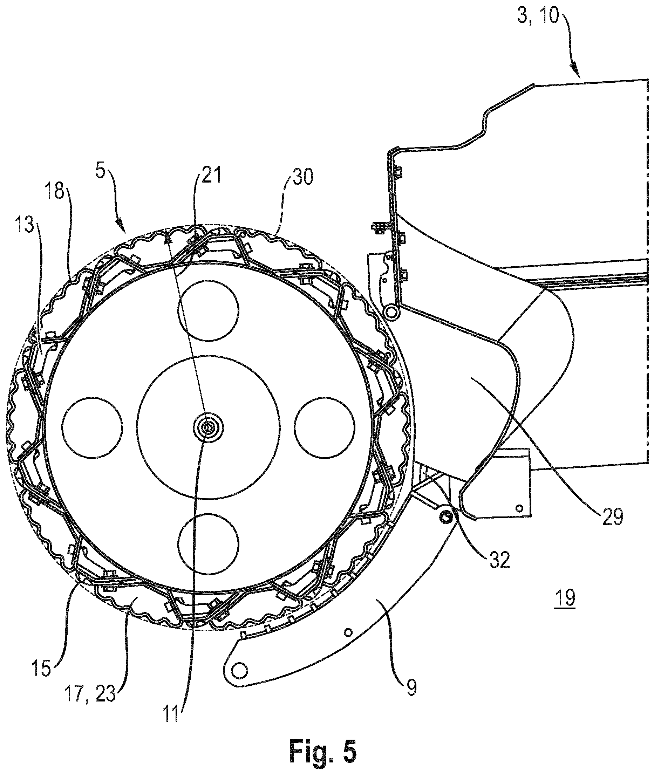

Eine erfindungsgemäße Dreschtrommel **5,** die in den **Figuren 4 bis 7** dargestellt ist, ist zur Verwendung an einem erfindungsgemäßen Mähdrescher 1 vorgesehen, mittels dessen Pflanzen von einem Feld aufnehmbar und verarbeitbar sind. Ein nach dem Stand der Technik bekannter Mähdrescher **1** ist beispielhaft anhand von **Figur 1** veranschaulicht. Dieser umfasst ein Schneidwerk **25,** mittels dessen Pflanzen abschneidbar sind, die sodann mittels eines Schrägförderers **26** einer tangentiale Drescheinrichtung **2** zuführbar sind. Die Drescheinrichtung **2** umfasst eine Vortrommel **4,** eine Dreschtrommel **5** sowie eine Wendetrommel **27,** wobei Mittelachsen der Trommeln quer zu einer Längsrichtung des Mähdreschers **1** ausgerichtet sind. Ferner umfasst die Drescheinrichtung **2** einen Dreschkorb **6,** der zumindest die Vortrommel **4** und die Dreschtrommel **5** bereichsweise einfasst. Die Verarbeitung des Ernteguts mittels der Drescheinrichtung **2** führt dazu, dass Früchte von den Pflanzen abgelöst und die Pflanzen auf diese Weise in die Früchte und verbleibende Pflanzenreste getrennt werden. Ein Großteil der Früchte kann unmittelbar im Bereich der Drescheinrichtung **2** mittels des Dreschkorbs **6** nach unten auf einen Vorlaufboden abgeführt werden. Im Übrigen wird ein Gemisch aus Pflanzenresten und abgelösten Früchten mittels der Wendetrommel **27** an eine nachgeschaltete Trenneinrichtung **3** übergeben. Diese ist in dem in **Figur 1** gezeigten Beispiel von einem Hordenschüttler gebildet. Die Trenneinrichtung **3** hat die Aufgabe, die verbliebenen Früchte von den Pflanzenresten zu trennen, sodass diese separiert gewonnen werden können. Die Pflanzenreste werden schließlich an einem hinteren Ende des Mähdreschers **1** aus selbigem ausgeworfen. Die Früchte werden hingegen in einem Korntank gesammelt und bis zur weiteren Abfuhr gelagert.

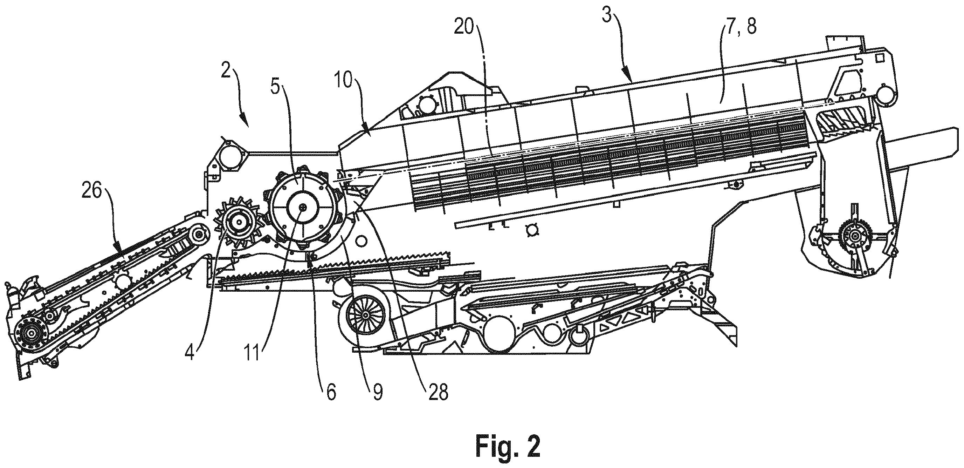

Alternativ zu einer als Hordenschüttler ausgebildeten Trenneinrichtung **3** ist ebenfalls eine axiale Trenneinrichtung **3** bekannt, die über mindestens einen Trennrotor **7, 8** verfügt. Anhand des in **Figur 2** gezeigten Beispiels aus dem Stand der Technik ergibt sich eine axiale Trenneinrichtung **3,** die über zwei Trennrotoren **7, 8** verfügt, die parallel zueinander sowie in Längsrichtung des Mähdreschers **1** betrachtet nebeneinander angeordnet sind. Die Trennrotoren **7, 8** sind jeweils um eine Drehachse **20** drehantreibbar gelagert. Die Trenneinrichtung **3** umfasst in diesem Beispiel einen der Drescheinrichtung **2** zugewandten Einlaufkopf **10,** in den das Erntegut ausgehende von der Drescheinrichtung **2** übergeben wird. Hierzu umfasst der Einlaufkopf **10** zwei Einlaufbereiche **29,** von denen jeweils einer einem der Trennrotoren **7, 8** zugeordnet ist. Die Einlaufbereiche **29** sind mittels eines Gutstromteilers **28** baulich voneinander getrennt, sodass Erntegut, das von der Drescheinrichtung **2** an die Trenneinrichtung **3** übergeben wird, mittels des Gutstromteilers **28** auf die beiden Einlaufbereiche **29** aufgeteilt wird. Der Gutstromteiler **28** ist hier von einer vertikalen Trennwand gebildet, die die beiden Einlaufbereiche **29** voneinander trennt. Eine Besonderheit der in **Figur 2** dargestellten Ausführungsform besteht darin, dass die Drescheinrichtung **2** ohne eine in **Figur 1** dargestellt Wendetrommel **27** oder eine sonstige Zuführtrommel ausgebildet ist, sodass das Erntegut unmittelbar von der Dreschtrommel **5** an die Trenneinrichtung **3** übergeben wird.

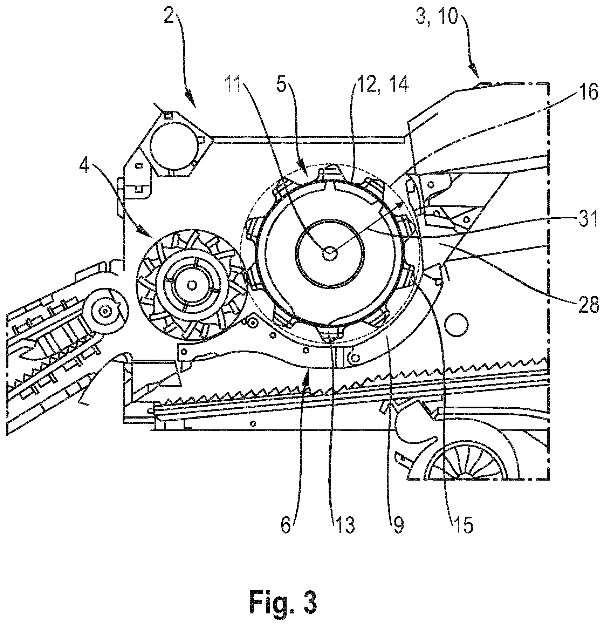

Die Dreschtrommel **5** erstreckt sich längs entlang einer Mittelachse **11** eines Trommelkörpers **12** und umfasst eine Mehrzahl von Schlagleisten **13.** Dies ergibt sich besonders gut anhand von **Figur 3****.** Die Schlagleisten **13** sind an einer äußeren Mantelfläche **14** des Trommelkörpers **12** der Dreschtrommel **5** angeordnet, wobei die Schlagleisten **13** bezogen auf die Mittelachse **11** des Trommelkörpers **12** radial über die Mantelfläche **14** hinaus vorstehen. Die Schlagleisten **13** umfassen jeweils eine Schlagkante **15,** die einen radial äußeren Abschluss einer jeweiligen Schlagleiste **13** bildet. Infolge eines Drehantriebs der Dreschtrommel **5** um die Mittelachse **11** im Zuge eines Betriebs des jeweiligen Mähdreschers **1** kommen die Schlagleisten **13** mit ihren Schlagkanten **15** in schlagenden Kontakt mit dem Erntegut, wodurch die Ablösung der Früchte von den Pflanzenresten bewirkt wird. Die Schlagkanten **15,** die sich parallel zu der Mittelachse **11** erstrecken, bewegen sich im Zuge eines Drehantriebs des Trommelkörpers **12** auf einem Umfangskreis **16,** der in **Figur 3** anhand einer gestrichelten Linie veranschaulicht ist. Der Umfangskreis **16** erstreckt sich bezogen auf die Mittelachse **11** in einem Schlagradius **31** um die Mittelachse **11.** Um einen Fluss des Ernteguts von der Drescheinrichtung **2** zu der Trenneinrichtung **3** zu begünstigen, ist der Dreschkorb **6** bündig einem der Drescheinrichtung **2** zugewandten Ende des Einlaufkopfs **10** vorgeordnet. In dem gezeigten Beispiel umfasst der Dreschkorb **6** ein hinteres Korbsegment **9,** das unmittelbar sowie bündig dem Einlaufkopf **10** vorgeordnet ist.

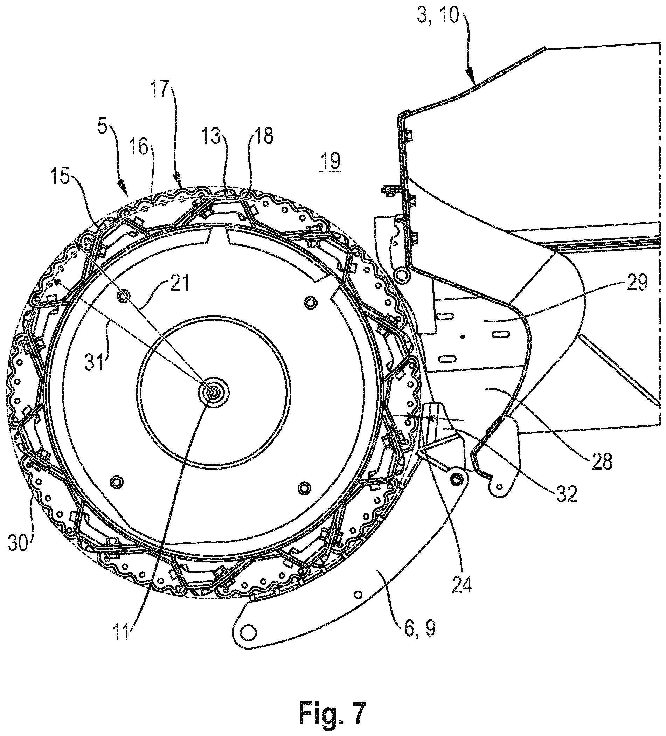

Erfindungsgemäß ist die Dreschtrommel **5** mit einem Schneidring **17** ausgestattet, der bezogen auf die Mittelachse **11** des Trommelkörpers **12** mittig an dem Trommelkörper **12** angeordnet ist und sich in einer senkrecht zu der Mittelachse **11** orientierten Ebene erstreckt. Dies ergibt sich besonders gut anhand von **Figur 4****.** Der Schneidring **17** umfasst in dem gezeigten Beispiel zwei Schneidscheiben **23,** die unmittelbar nebeneinander paarweise angeordnet sind. Die Schneidscheiben **23** sind zumindest im Wesentlichen baugleich und weisen jeweils eine Schneidkante **18** auf, wobei sich die Schneidkanten **18** jeweils in einer senkrecht zu der Mittelachse **11** orientierten Schneidebene **19** erstrecken. Hierbei ist der Schneidring **17** derart ausgebildet, dass die Schneidkanten **18** der Schneidscheiben **23** bezogen auf die Mittelachse **11** in einem Umfangskreis **30** um die Mittelachse **11** ringförmig umlaufend ausgebildet sind. Ein Schneidradius **21** des Umfangskreises **30** ist hierbei größer als der Schlagradius **31** der Schlagkanten **15.** Mit anderen Worten stehen die Schneidkanten **18** bezogen auf die Mittelachse **11** radial weiter über die äußere Mantelfläche **14** des Trommelkörpers **12** vor als die Schlagleisten **15.** Dies ergibt sich besonders gut anhand von **Figur 7****.**

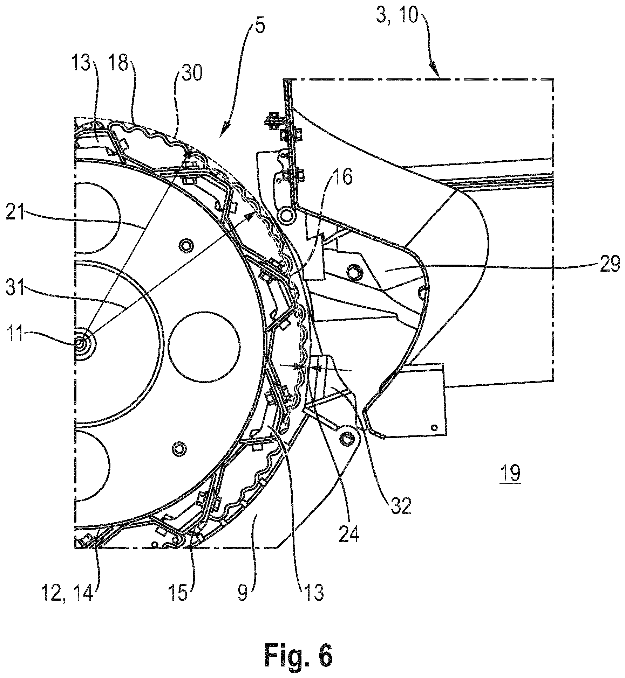

In dem gezeigten Beispiel ist der Schneidring **17** segmentiert ausgebildet, das heißt von einer Vielzahl einzelner Ringsegmente **22** gebildet. Diese Ringsegmente **22** sind jeweils zwischen zwei benachbarten Schlagleisten **13** angeordnet, wie sich besonders gut anhand von **Figur 4** ergibt. Diese Ausgestaltung führt dazu, dass die Schneidkanten **18** nicht in sich geschlossen, sondern mehrfach, nämlich der Anzahl der Schlagleisten **13** entsprechend häufig unterbrochen sind. Dies ergibt sich besonders gut anhand der **Figuren 6** **und** **7****.** Diese Ausgestaltung hat den Vorteil, dass die Schlagleisten **13** bzw. deren Schlagkanten **15** nicht unterbrochen werden müssen. Zudem ist die Ausgestaltung des Schneidrings **17** in Form einer Vielzahl von Ringsegmenten **22** besonders vorteilhaft, um eine bestehende Dreschtrommel **5** nachzurüsten und auf diese Weise mit einem Schneidring **17** auszustatten.

Bezogen auf die Trenneinrichtung **3** bzw. deren Einlaufkopf **10** ist der Schneidring **17** derart angeordnet, dass er unmittelbar an den Einlaufkopf **10** angrenzend angeordnet ist. Dies ergibt sich besonders gut anhand von **Figur 6****.** In besonders vorteilhafter Weise ist in dem gezeigten Beispiel der Schneidring **17** zudem dem Gutstromteiler **28** zugeordnet, sodass eine schneidende Wirkung der Schneidkanten **18** auf das Erntegut dort eintritt, wo sie zwecks Verteilung des Ernteguts auf die beiden Einlaufbereiche **29** des Einlaufkopfs **10** benötigt wird. Insbesondere wird das Pflanzenmaterial des Erntegutstroms derart zerschnitten, dass es sauber mittels des Gutstromteilers **28** auf den linken und den rechten Einlaufbereiche **29** aufgeteilt werden kann. In besonders bevorzugter Weise beträgt in dem gezeigten Beispiel ein Abstand **24** des Umfangskreises **30** der Schneidkanten **18** zu dem Gutstromteiler **28** lediglich ca. 5 mm.

Zur Erzielung einer besseren Schneidwirkung sind die Schneidkanten **18** in dem gezeigten Beispiel wellenförmig ausgebildet, wie sich besonders gut anhand von **Figur 7** ergibt.

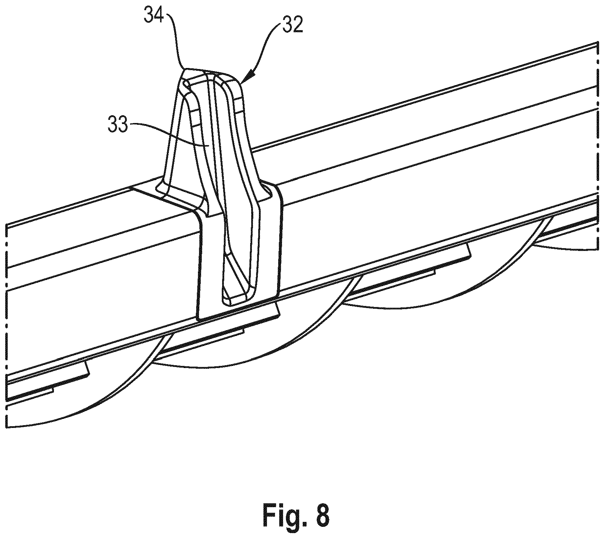

Um die Aufteilung des Erntegutstroms auf die beiden Einlaufbereiche **29** des Einlaufkopfs **10** weiter zu optimieren, ist der Dreschkorb **6** in dem gezeigten Beispiel mit einer Gutleithilfe **32** ausgestattet. Diese ist dem Korbsegment **9** des Dreschkorb **6** zugeordnet, wobei die Gutleithilfe **32** bezogen auf den Einlaufkopf **10** dem Gutstromteiler **28** zugeordnet ist. Hierbei ist die Gutleithilfe **32** derart ausgebildet, dass sie den Gutstromteiler **28,** der von einer vertikalen Trennwand zwischen den beiden Einlaufbereichen **29** gebildet ist, umgreift. Hierzu umfasst die Gutleithilfe **32** in dem gezeigten Beispiel eine rückwärtige Nut **33,** in der der Gutstromteiler **28** geführt ist. Im Zuge einer Bewegung des Dreschkorbs **6** bzw. zumindest des Korbsegments **9** relativ zu der Dreschtrommel **5** wird entsprechend die Gutleithilfe **32** bewegt, da diese fest mit dem übrigen Dreschkorb **6** verbunden und ein Teil des Dreschkorbs ist. Hierbei wird die Gutleithilfe **32** derart mittels ihrer Nut **33** entlang des Gutstromteilers **28** geführt, dass der Gutstromteiler **28** fortwährend in der Nut **33** angeordnet ist. Dies hat den Vorteil, dass die teilende Wirkung der Gutleithilfe **32** unabhängig von einer Stellung des Dreschkorbs **6** relativ zu der Dreschtrommel **5** vorhanden ist, wodurch wiederum die Aufteilung des Erntegutstroms auf die Einlaufbereiche **29** des Einlaufkopfs **10** verbessert wird. Zu diesem Zweck ist die Gutleithilfe **32** an ihrem der Dreschtrommel **5** zugewandten Ende keilförmig ausgebildet, wobei die Gutleithilfe **32** in Richtung der Drescheinrichtung **2** zu einer spitzen Kante **34** hin zu läuft. Dies ergibt sich besonders gut anhand von **Figur 8****.**

### Bezugszeichenliste

- 1: Mähdrescher
- 2: Drescheinrichtung
- 3: Trenneinrichtung
- 4: Vortrommel
- 5: Dreschtrommel
- 6: Dreschkorb
- 7: Trennrotor
- 8: Trennrotor
- 9: Korbsegment
- 10: Einlaufkopf
- 11: Mittelachse
- 12: Trommelkörper
- 13: Schlagleiste
- 14: Mantelfläche
- 15: Schlagkante
- 16: Umfangskreis
- 17: Schneidring
- 18: Schneidkante
- 19: Schneidebene
- 20: Drehachse
- 21: Schneidradius
- 22: Ringsegment
- 23: Schneidscheibe
- 24: Abstand
- 25: Schneidwerk
- 26: Schrägförderer
- 27: Wendetrommel
- 28: Gutstromteiler
- 29: Einlaufbereich
- 30: Umfangskreis
- 31: Schlagradius
- 32: Gutleithilfe
- 33: Nut
- 34: Kante

## Patentansprüche

1. Dreschtrommel (5) für eine Drescheinrichtung (2) eines Mähdreschers (1), umfassend
- einen zylindrischen, um seine Mittelachse (11) drehantreibbaren Trommelkörper (12),
- eine Vielzahl von Schlagleisten (13), die an einer äußeren Mantelfläche (14) des Trommelkörpers (12) angeordnet sind,
wobei die Schlagleisten (13) jeweils eine Schlagkante (15) aufweisen, die parallel zu der Mittelachse (11) des Trommelkörpers (12) orientiert sind,
wobei die Schlagleisten (13) jeweils in radiale Richtung bezogen auf die Mittelachse (11) des Trommelkörpers (12) in eine von der Mittelachse (11) weg gerichtete Richtung über die äußere Mantelfläche (14) des Trommelkörpers (12) vorstehen und an der radial außen liegenden Schlagkante (15) einen Umfangskreis (16) um die Mittelachse (11) beschreiben, auf dem die jeweilige Schlagkante (15) bei bestimmungsgemäßem Betrieb der Dreschtrommel (5) in einem Schlagradius (31) um die Mittelachse (11) umläuft,
**gekennzeichnet durch**
einen in Längsrichtung des Trommelkörpers (12) betrachtet mittig an der äußeren Mantelfläche (14) des Trommelkörpers (12) angeordneten Schneidring (17), der in Umfangsrichtung des Trommelkörpers (12) umläuft,
wobei der Schneidring (17) mindestens eine radial äußere, in Umfangsrichtung des Trommelkörpers (12) umlaufende Schneidkante (18) aufweist,
wobei die Schneidkante (18) in einer senkrecht zu der Mittelachse (11) des Trommelkörpers (12) angeordneten Schneidebene (19) verläuft und einen Umfangskreis (30) beschreibt, dessen bezogen auf die Mittelachse (11) gemessener Schneidradius (21) größer ist als die Schlagradien (31) der Schlagkanten (15) der Schlagleisten (13).

2. Dreschtrommel (5) nach Anspruch 1, **dadurch gekennzeichnet, dass** der Schneidring (17) von einer Vielzahl einzelner Ringsegmente (22) gebildet ist, die in Zwischenräume zwischen zwei Schlagleisten (13) eingesetzt sind, sodass die Schneidkante (18) in Zwischenbereichen zwischen zwei benachbarten Ringsegmenten (22) unterbrochen ist.

3. Dreschtrommel (5) nach einem der vorhergehenden Ansprüche, **dadurch gekennzeichnet, dass** der Schneidring (17) eine Mehrzahl von Schneidscheiben (23), vorzugsweise zwei Schneidscheiben (23), aufweist, wobei die Schneidscheiben (23) in Längsrichtung des Trommelkörpers (12) betrachtet nebeneinander angeordnet sind, vorzugsweise unmittelbar nebeneinander.

4. Dreschtrommel (5) nach Anspruch 3, **dadurch gekennzeichnet, dass** die Schneidscheiben (23) jeweils eine Schneidkante (18) aufweisen, wobei vorzugsweise die Schneidkanten (18) aller Schneidscheiben (23) einen gleichen Schneidradius (21) aufweisen.

5. Dreschtrommel (5) nach einem der vorhergehenden Ansprüche, **dadurch gekennzeichnet, dass** mindestens eine Schneidkante (18), vorzugsweise sämtliche Schneidkanten (18), eine Sägezahnkontur oder eine Wellenkontur aufweisen.

6. Dreschtrommel (5) nach einem der vorhergehenden Ansprüche, **dadurch gekennzeichnet, dass** sich die Schlagleisten (13) über eine gesamte Länge des Trommelkörpers (12) erstrecken.

7. Selbstfahrender Mähdrescher (1), umfassend
- eine tangentiale Drescheinrichtung (2) sowie
- eine axiale Trenneinrichtung (3),
wobei die Drescheinrichtung (2) eine tangentiale Vortrommel (4), eine in Strömungsrichtung eines Erntegutstroms der Vortrommel (4) nachgeschaltete tangentiale Dreschtrommel (5) sowie einen sowohl die Vortrommel (4) als auch die Dreschtrommel (5) zumindest bereichsweise ummantelnden Dreschkorb (6) aufweist,
wobei die Trenneinrichtung (3) in Strömungsrichtung des Erntegutstroms betrachtet der Drescheinrichtung (2) unmittelbar nachgeschaltet ist und zwei axiale Trennrotoren (7, 8) umfasst,
**dadurch gekennzeichnet, dass**
die Dreschtrommel (5) nach einem der Ansprüche 1 bis 6 ausgebildet ist.

8. Mähdrescher (1) nach Anspruch 7, **dadurch gekennzeichnet, dass** die Trenneinrichtung (3) an einem der Drescheinrichtung (2) zugewandten Ende einen Einlaufkopf (10) aufweist, in den der Erntegutstrom von der Drescheinrichtung (2) aus kommend übergebbar und geordnet den Trennrotoren (7, 8) zuleitbar ist.

9. Mähdrescher (1) nach Anspruch 8, **dadurch gekennzeichnet, dass** die Dreschtrommel (5) derart relativ zu dem Einlaufkopf (10) positioniert ist, dass die mindestens eine Schneidkante (18) des Schneidrings (17) in einem Abstand (24) von maximal 20 mm, vorzugsweise maximal 10 mm, weiter vorzugsweise maximal 5 mm, vor dem Einlaufkopf (10) angeordnet ist.

10. Mähdrescher (1) nach Anspruch 8 oder 9, **dadurch gekennzeichnet, dass** der Einlaufkopf (10) an einem der Dreschtrommel (5) zugewandten Ende einen mittigen Gutstromteiler (28) aufweist, der in Form einer vertikal orientierten Trennwand ausgebildet und dazu geeignet ist, den von der Dreschtrommel (5) an den Einlaufkopf (10) übergebenen Erntegutstrom auf die beiden Trennrotoren (7, 8) aufzuteilen.

11. Mähdrescher (1) nach Anspruch 10, **dadurch gekennzeichnet, dass** der Dreschkorb (6) eine Gutleithilfe (23) umfasst, die dem Gutstromteiler (28) zugeordnet ist und diesen bereichsweise umgreift, wobei die Gutleithilfe (23) im Zuge einer Bewegung des Dreschkorbs (6) relativ zu dem Einlaufkopf (10) entlang dem Gutstromteiler (28) führbar ist.

12. Mähdrescher (1) nach Anspruch 10 oder 11, **dadurch gekennzeichnet, dass** die Gutleithilfe (32) an einer von dem übrigen Dreschkorb (6) abgewandten Seite eine Nut (33) umfasst, in der der Gutstromteiler (28) geführt ist.

13. Mähdrescher (1) nach einem der vorhergehenden Ansprüche, **dadurch gekennzeichnet, dass** zumindest ein Korbsegment (9) des Dreschkorbs (6) bündig einem der Drescheinrichtung (2) zugewandten Ende des Einlaufkopfs (10) vorgeordnet ist.
